# EUROPEAN PATENT APPLICATION

(11) **EP 4 732 819 A1**
(43) Date of publication of application: **29.04.2026**
(21) Application number: 24221477.3
(22) Date of filing: 19.12.2024
(51) Int. Cl.: A61G 7/10, A61G 5/10, B60B 33/00

(54) **ELECTRIC LIFT DEVICE**

(30) Priority: 25.10.2024 CN 202422590912 U
(71) Applicant: Intradin (Shanghai) Machinery Co., Ltd., Shanghai 201109 (CN)
(72) Inventor: LI, Ping, Shanghai, 201109 (CN); QIAO, Xuetao, Shanghai, 201109 (CN)
(74) Representative: Vitina, Maruta

(57) **Abstract**

An electric lift device includes a frame assembly, a backrest, a bearing plate, at least two armrests and a driving mechanism. The frame assembly includes a first wheel frame, a second wheel frame, a first connection plate, at least two vertical rods, a sleeve rod and a second connection plate. The backrest is fixedly connected to an outer side of the sleeve rod. The bearing plate is connected to the sleeve rod. The at least two armrests are respectively provided at two lateral sides of the backrest. The driving mechanism is installed on a surface of the first connection plate, and is configured to drive the sleeve rod to move up and down.

## Description

### TECHNICAL FIELD

This application relates to standing aids, and more particularly to an electric lift device.

### BACKGROUND

A standing aid is necessary to help elderly people with limited mobility or patients with paralysis move and stand during the rehabilitation process.

The existing aids have poor structural stability, and are prone to tilting to one side, which may cause elderly people or patients to fall, resulting in poor safety. To address this issue, an electric lift device is provided herein.

### SUMMARY

In view of the defects in the prior art, the present disclosure provides an electric lift device, comprising:
a frame assembly;
a backrest;
a bearing plate;
at least two armrests; and
a driving mechanism;
wherein the frame assembly comprises a first wheel frame, a second wheel frame, a first connection plate, at least two vertical rods, a sleeve rod and a second connection plate; the first wheel frame and the second wheel frame both have a Z-shaped structure; the first wheel frame is connected to the second wheel frame through the first connection plate; the at least two vertical rods are provided spaced apart on the first connection plate, and are parallel to each other; a first end of each of the at least two vertical rods is connected to the first connection plate, and a second end of each of the at least two vertical rods is movably sleeved with the sleeve rod; an upper end of the sleeve rod is fixedly connected to the second connection plate;
the backrest is fixedly connected to an outer side of the sleeve rod;
the bearing plate is connected to the sleeve rod;
the at least two armrests are respectively provided at two sides of the backrest; and
the driving mechanism is provided on a surface of the first connection plate, and is configured to drive the sleeve rod to move up and down.

In an embodiment, a plane in which the at least two vertical rods are located is configured as a reference plane; the bearing plate is provided at a first side of the reference plane; a first end of the first wheel frame and a first end of the second wheel frame are each provided at the first side of the reference plane; a second end of the first wheel frame and a second end of the second wheel frame are each provided at a second side of the reference plane; and a distance between the first end of the first wheel frame and the first end of the second wheel frame is greater than a distance between the second end of the first wheel frame and the second end of the second wheel frame.

In an embodiment, each of the first wheel frame and the second wheel frame comprises a first section, a second section and a third section connected in sequence from the first side of the reference plane to the second side of the reference plane; the second section is configured to extend toward outside of the electric lift device; an included angle formed by the third section and the second section is larger than or equal to 90° and smaller than 180°; and an included angle formed by the first section and the second section is larger than the included angle formed by the third section and the second section, and smaller than 180°. In an embodiment, a bottom of the bearing plate is provided with at least one connection rod; a bottom of the backrest is provided with a first mounting component; and the first mounting component is detachably connected to the at least one connection rod.

In an embodiment, a side wall of each of the at least one connection rod is provided with a first through-hole; a side wall of the first mounting component is provided with a second through-hole; an end of each of the at least one connection rod is inserted into the first mounting component; and each of the at least one connection rod is secured to the first mounting component via a pin passing through the first through-hole and the second through-hole.

In an embodiment, an end of the pin is provided with a flexible strip; a first end of the flexible strip is fixedly connected to the pin; and a second end of the flexible strip is provided with a loop.

In an embodiment, the driving mechanism comprises an electric telescopic rod, a motor, and a power supply; the motor is provided on the surface of the first connection plate; a first end of the electric telescopic rod is drivably connected to the motor; a second end of the electric telescopic rod is hinged to the second connection plate; and the power supply is provided on a side wall of the electric telescopic rod.

In an embodiment, an end of each of the at least two armrests is provided with a controller; and the controller is electrically connected to the motor, and provided with a control stick.

In an embodiment, an end of each of the at least two armrests is connected to the backrest through a rotation mechanism; the rotation mechanism comprises a second mounting component, a limiting plate and a sliding rod; a first end of the second mounting component is fixedly connected to the first mounting component, and a second end of the second mounting component is rotatably connected to each of the at least two armrests; the limiting plate is fixedly sleeved on an outer wall of the second mounting component; an edge of the limiting plate is provided with at least one sliding rail; the at least one sliding rail has a curved structure; a first end of the sliding rod is fixedly provided on a side of each of the at least two armrests near the limiting plate, and a second end of the sliding rod is configured to extend into and slide along one of the at least one sliding rail.

In an embodiment, a hook is mounted on a side wall of the second mounting component. In an embodiment, the electric lift device further comprises:
a first universal wheel; and
a second universal wheel;
wherein the first end of the first wheel frame and the first end of the second wheel frame are each provided with the first universal wheel; and the second end of the first wheel frame and the second end of the second wheel frame are each provided with the second universal wheel through a mounting component.

In an embodiment, a size of the first universal wheel is smaller than or equal to a size of the second universal wheel.

In an embodiment, the second universal wheel is provided with a locking component.

In an embodiment, an upper end of each of the at least two vertical rods is inclined at a preset angle toward a side away from the bearing plate relative to a vertical plane where the at least two vertical rods are located.

In an embodiment, the preset angle is 4°-10°.

The benefits of the technical solutions provided herein are described as follows.

Due to the arrangement of the at least two vertical rods, the vertical stability of the device is enhanced when the driving mechanism drives the sleeve rod and the bearing plate to move up and down. The "Z"-shaped design of the first wheel frame and the second wheel frame further increases the horizontal stability of the device during the turning process, effectively preventing the device from tilting toward one side. Moreover, such wheel frame design can offer a larger space for leg movement of a user, thereby improving the comfortability.

### BRIEF DESCRIPTION OF THE DRAWINGS

In order to illustrate the technical solutions in the embodiments of the present disclosure or the prior art more clearly, the accompanying drawings needed in the description of the embodiments or the prior art will be briefly described below. Obviously, presented in the accompanying drawings are only some embodiments of the present disclosure. Other embodiments may also be obtained by those skilled in the art according to these accompanying drawings without making creative effort.
Fig. 1 is a structural diagram of an electric lift device according to an embodiment of the present application;
Fig. 2 is a rear view of the electric lift device according to an embodiment of the present application;
Fig. 3 illustrates an internal structure of a rotation mechanism of the electric lift device according to an embodiment of the present application;
Fig. 4 is a bottom view of the electric lift device according to an embodiment of the present application;
Fig. 5 is an enlarged view of part "A" in Fig. 1;
Fig. 6 is an enlarged view of part "B" in Fig. 2; and
Fig. 7 is an enlarged view of part "C" in Fig. 3.

In the figures, 1-frame assembly; 11-first wheel frame; 111-protective cover; 12-second wheel frame; 121-first section; 122-second section; 123-third section; 13-first connection plate; 14-vertical rod; 15-sleeve rod; 16-second connection plate; 161-first handle; 2-backrest; 21-front guard plate; 22-rear guard plate; 23-second handle; 3-bearing plate; 31-connection rod; 32-first mounting component; 33-pin; 331-flexible strip; 332-loop; 333-first through-hole; 334-second through-hole; 4-armrest; 41-soft cover; 42-controller; 43-control stick; 5-driving mechanism; 51-electric telescopic rod; 52-motor; 53-power supply; 6-rotation mechanism; 61-second mounting component; 611-hook; 62-limiting plate; 621-sliding rail; 6211-first groove; 6212-second groove; 63-sliding rod; 64-protective shell; 7-first universal wheel; 8-third mounting component; 9-second universal wheel; and 91-locking component.

The implementation, function characteristics and advantages of the present disclosure will be presented below with reference to the embodiments and accompanying drawings.

### DETAILED DESCRIPTION OF EMBODIMENTS

The clear and comprehensive description of the technical solutions in the embodiments of the present disclosure will be provided below with reference to the accompanying drawings. Obviously, the described embodiments are only some embodiments of the present disclosure, rather than all embodiments. Based on the embodiments of the present disclosure, all other embodiments obtained by those skilled in the art without creative labor shall fall within the scope of the disclosure defined by the appended claims.

It should be noted that all directional indications such as top, bottom, left, right, front, rear, etc. in the embodiments of the present disclosure are only used to explain the relative positional relationship or movement between components under a specific configuration as shown in the drawings. If this specific configuration changes, the directional indications will change accordingly.

Furthermore, terms, such as "first", "second", etc., in the present disclosure are only descriptive, and should not be construed as indicating or implying their relative importance or implicitly specifying the number of the indicated technical features. Therefore, features defined by "first" or "second" may expressly or implicitly include at least one of such feature. Additionally, "and/or" herein includes three solutions, for example, "A and/or B" includes the A technical solution, the B technical solution, and a combination thereof. Furthermore, the technical solutions among various embodiments can be combined with each other as long as the combined solution can be implemented by those skilled in the art. When the combination of technical solutions appears contradictory or cannot be achieved, it should be considered that such a combination does not exist, and shall not fall within the scope of the present disclosure.

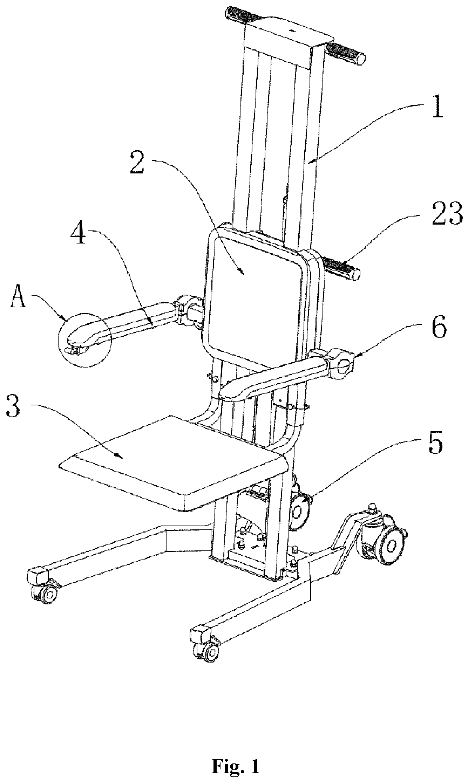

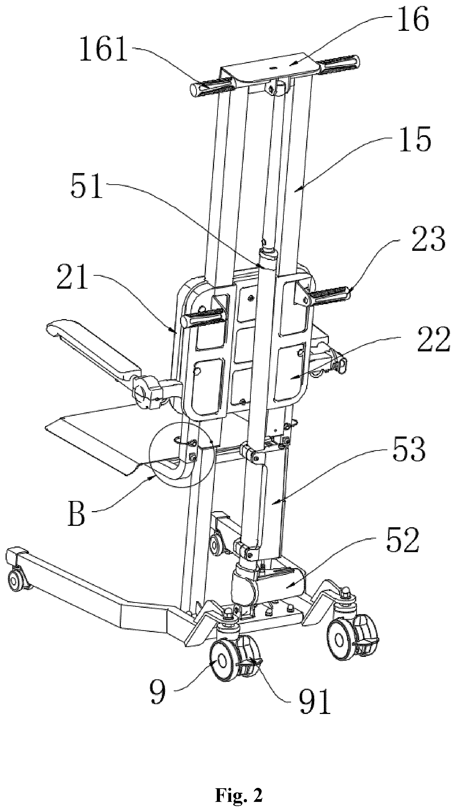

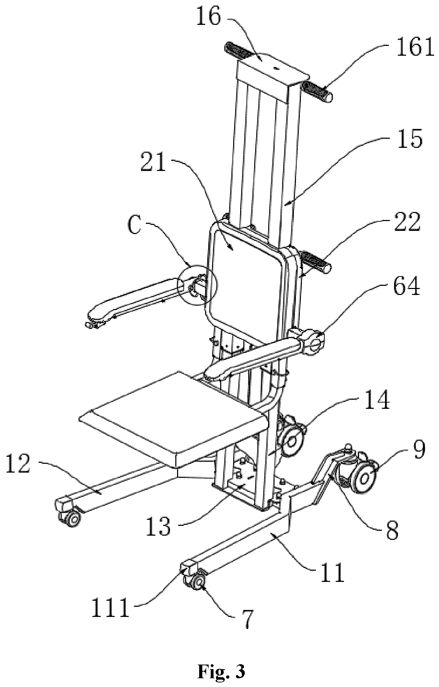

As shown in Figs. 1-4, the present application provides an electric lift device, including a frame assembly 1. The frame assembly 1 includes a first wheel frame 11, a second wheel frame 12, a first connection plate 13, at least two vertical rods 14, a sleeve rod 15, and a second connection plate 16. The first wheel frame 11 and the second wheel frame 12 both have a Z-shaped structure. The first wheel frame 11 is connected to the second wheel frame 12 through the first connection plate 13. The at least two vertical rods 14 are provided apart on the first connection plate 13, and are parallel to each other. A first end of each of the at least two vertical rods 14 is connected to the first connection plate 13. A second end of each of the at least two vertical rods 14 is movably sleeved with one of the sleeve rods 15. An upper end of each of the sleeve rods 15 is fixedly connected to the second connection plate 16.

The electric lift device includes a backrest 2, which is fixedly connected to an outer side of the sleeve rod 15.

The electric lift device includes a bearing plate 3. The bearing plate 3 is detachably connected to the backrest 2.

The electric lift device includes at least two armrests 4. The at least two armrests 4 are respectively located on two sides of the backrest 2. An end of each of the at least two armrests 4 is connected to the backrest 2 through a rotation mechanism 6.

The electric lift device includes a driving mechanism 5. The driving mechanism 5 is provided on a surface of the first connection plate 13 and is configured to drive the sleeve rods 15 to move up and down.

The wheel groups are respectively installed at the ends of the first wheel frame 11 and the second wheel frame 12.

In this embodiment, the cross-sectional shapes of the first wheel frame 11, the second wheel frame 12, and the vertical rods 14 are square. Alternatively, they may also be circular, elliptical, or polygonal. The shape of the sleeve rods 15 matches that of the vertical rods 14. The vertical rods 14 are arranged upright and are detachably connected to the first connection plate 13 via bolts. An upper end of each of the at least two vertical rods is inclined at a preset angle toward a side away from the bearing plate relative to a vertical plane where the at least two vertical rods are located. This arrangement of inclination helps offset or partially offset the user's forward-leaning tendency when sitting on the bearing plate, thereby preventing forward falls and making the electric lift device safer and more reliable.

There are two vertical rods 14. This arrangement can enhance the structural stability when the driving mechanism 5 drives the sleeve rods 15 and the bearing plate 3 to move up and down. Additionally, the first wheel frame 11 and the second wheel frame 12 are designed in a "Z" shape. This design increases the horizontal distance between the first wheel frame 11 and the second wheel frame 12, enhancing structural stability of the device during the turning process and effectively preventing the device from tilting toward one side.

The backrest 2 consists of a front guard plate 21 and a rear guard plate 22, which are detachably connected by bolts. The bearing plate 3 is arranged parallel to the ground or inclined toward the ground. For the inclined configuration, the minimum height of the bearing plate 3 from the ground is 50 mm, making it easier for individuals to transfer onto the plate. The armrests 4 are installed on both sides of the backrest 2.

The driving mechanism 5 allows the sleeve rods 15 to slide up and down along the surface of the vertical rods 14 to drive the bearing plate 3 to ascend and descend. The driving mechanism 5 is positioned at the side of the sleeve rods 15 away from the bearing plate 3 to balance weight distribution, ensuring greater stability of the device during the movement process.

The wheel groups allow the lift device to move flexibly.

Due to the arrangement of two vertical rods 14, vertical stability is improved when the driving mechanism 5 moves the sleeve rods 15 and the bearing plate 3 up and down. Furthermore, the "Z" shape design of the first wheel frame 11 and the second wheel frame 12 increases the horizontal stability of the device during the turning process, effectively preventing the device from tilting toward one side.

In one embodiment, a plane where the vertical rods 14 are located is configured as a reference plane. The bearing plate 3 is positioned at a first side of the reference plane. The distance between the end of the first wheel frame 11 at the first side of the reference plane and the end of the second wheel frame 12 at the first side of the reference plane is greater than the distance between the end of the first wheel frame 11 at a second side of the reference plane and the second of the second wheel frame 12 at the second side of the reference plane. In this embodiment, the first wheel frame 11 and the second wheel frame 12 are together configured to form a splayed shape, further improving the overall stability. Additionally, when users stand or perform movement training (with the bearing plate 3 removed), there is more space for legs, and the first wheel frame 11 and the second wheel frame 12 do not obstruct the user.

In this embodiment, each of the first wheel frame 11 and the second wheel frame 12 includes a first section 121, a second section 122 and a third section 123 connected in sequence from the first side of the reference plane to the second side of the reference plane. Specifically, a first end of the first section 121 is connected with a first end of the second section 122; a second end of the second section 122 is connected to an end of the third section 123. The second section 122 is configured to extend toward outside of the electric lift device. An included angle (indicated by "α") formed by the third section 123 and the second section 122 is larger than or equal to 90° and smaller than 180°; and an included angle (indicated by "β") formed by the first section 121 and the second section 122 is larger than the included angle formed by the third section 123 and the second section 122, and smaller than 180°. In this way, a distance between a second end of the first section 121 of the first wheel frame 11 and a second end of the first section 121 of the second wheel frame 12 is larger than a distance between the first end of the first section 121 of the first wheel frame 11 and the first end of the first section 121 of the second wheel frame 12, and a distance between the first end of the second section 122 of the first wheel frame 11 and the first end of the second section 122 of the second wheel frame 12 is larger than a distance between the second end of the second section 122 of the first wheel frame 11 and the second end of the second section 122 of the second wheel frame. This arrangement can enhance the stability and offer more activity space for user' legs.

In one embodiment, the two sides of the second connection plate 16 are equipped with first handles 161, and the two sides of the rear guard plate 22 of the backrest 2 are equipped with second handles 23. The first handles 161 and the second handles 23 are arranged vertically at different heights.

In this embodiment, the handles at different heights serve different purposes: the first handles 161 are used for pushing the device after the bearing plate 3 is lowered, while the second handles 23 are used when users stand up or perform standing training.

In one embodiment, the device also includes first universal wheels 7 and second universal wheels 9. The size of the first universal wheels 7 is less than or equal to that of the second universal wheels 9. The first universal wheels 7 are installed at the ends of the first wheel frame 11 and the second wheel frame 12 at the first side of the reference plane, while the second universal wheels 9 are installed at the other ends of the first wheel frame 11 and the second wheel frame 12 at the second side of the reference plane via the third mounting component 8.

In this embodiment, the first universal wheels 7 and the second universal wheels 9 significantly enhance the mobility of the electric lift device, enabling multidirectional flexible turning during movement. The second universal wheels 9 with a larger size further improve the load-bearing capacity of the device.

In one embodiment, protective covers 111 are sleeved on the ends of the first wheel frame 11 and the second wheel frame 12 where the first universal wheels 7 are installed.

In this embodiment, the protective covers 111 effectively prevent collisions. Additionally, the protective covers 111 are made of soft rubber material, which reduces vibration during collisions.

In one embodiment, the second universal wheels 9 are provided with lock device 91.

In this embodiment, the locking components 91 can lock and unlock the second universal wheels 9. When movement is not needed, the second universal wheels 9 can be locked, immobilizing the lift device. When movement is required, unlocking the locking components 91 allows the lift device to move freely.

In one embodiment, the driving mechanism 5 includes an electric telescopic rod 51, a motor 52, and a power supply 53. The motor 52 is mounted on the surface of the first connection plate 13. One end of the electric telescopic rod 51 is drivably connected to the motor 52, while the other end of the electric telescopic rod 51 is hinged to the second connection plate 16. The power supply 53 is mounted on the side wall of the electric telescopic rod 51.

In this embodiment, the power supply 53 consists of a battery and a charger, which are integrated into a single box. The power supply 53 supplies power to the motor 52. The motor 52 is configured to drive the electric telescopic rod 51 to extend and retract, thereby driving the second connection plate 16 up and down, and enabling the sleeve rods 15 and the bearing plate 3 to rise and fall. The electric telescopic rod 51 operates at a safe voltage of 24V and provides a thrust of 3000N.

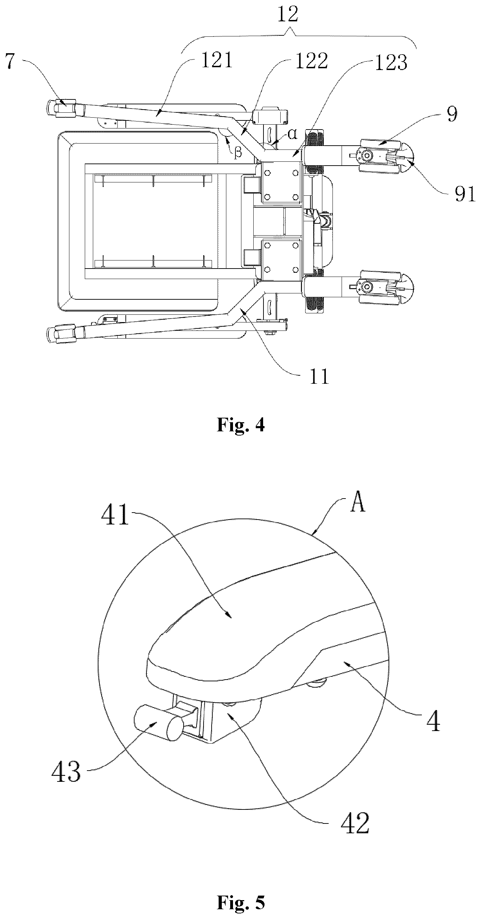

As shown in Fig. 5, in one embodiment, the end of the armrest 4 is provided with a controller 42. The controller 42 is electrically connected to the motor 52. The controller 42 is equipped with a control stick 43.

In this embodiment, the controller 42 can control the rotation of the motor 52. Specifically, by the control stick 43 pushed upward, the controller 42 sends a command to the motor 52, which drives the electric telescopic rod 51 to extend, allowing the sleeve rod 15 and the bearing plate 3 to rise. Conversely, by the control stick 43 pushed downward, the motor 52 drives the electric telescopic rod 51 to retract, allowing the sleeve rod 15 and the bearing plate 3 to descend.

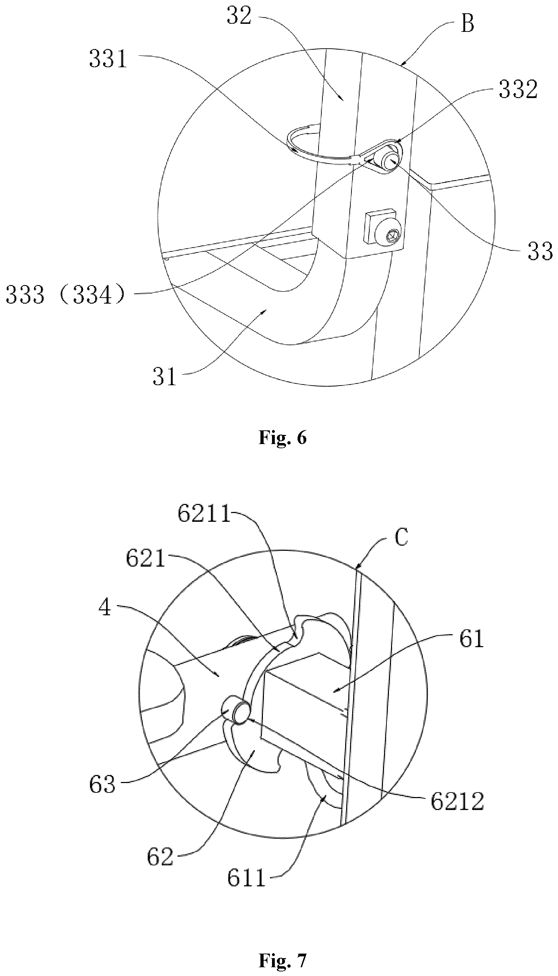

As shown in Fig. 6, in one embodiment, at least one connection rod 31 is provided at the bottom of the bearing plate 3, and a first mounting component 32 is provided at the bottom of the backrest 2. A side wall of each of the at least one connection rod is provided with a first through-hole 333 and a side wall of the first mounting component is provided with a second through-hole 334. One end of the connection rod 31 is inserted into the first mounting component 32. By a pin 33 passing through the first through-hole 333 and the second through-hole 334, the connection rod 31 is secured to the first mounting component 32.

In this embodiment, the first mounting component 32 has a tubular structure and a rectangular cross-section. Optionally, the cross-section can also be circular, oval, or polygonal. One end of the first mounting component 32 is fixedly connected to the bottom of the backrest 2, while the other end of the first mounting component 32 is inserted into the connection rod 31. The connection rod 31 has an L-shaped shape, and the cross-section of the connection rod 31 matches the first mounting component 32.

During installation, the installation end of the connection rod 31 is inserted into the first mounting component 32, aligning the first through-holes 333 on the connection rod 31 with the second through-holes 334 on the first mounting component 32. At this point, the pin 33 is inserted into these through-holes, passing through both the connection rod 31 and the first mounting component 32, completing the installation of the bearing plate 3.

In one embodiment, a first end of the pin 33 is equipped with a flexible strip 331, which is fixedly connected to the pin 33. The other end of the flexible strip 331 is provided with a loop 332.

In this embodiment, the loop 332 is an elastic rubber ring that can be sleeved onto the surface of the pin 33. Specifically, after the pin 33 passes through the first through-hole 333 and the second through-hole 334, the installation of the bearing plate 3 is complete. At this point, the loop 332 is sleeved onto a second end of the pin 33. Under the tension of the loop 332, the loop 332 sleeved onto the pin 33, forming a closed loop with the pin 33 and the flexible strip 331. This arrangement effectively prevents the pin 33 from detaching from the through-holes during movement of the lift device, which could otherwise cause the connection rod 31 to separate from the first mounting component 32. This configuration further enhances the stability of the connection between the connection rod 31 and the first mounting component 32.

As shown in Fig. 7, in one embodiment, the rotation mechanism 6 includes a second mounting component 61, a limiting plate 62, and a sliding rod 63. One end of the second mounting component 61 is fixedly connected to the first mounting component 32, while the other end of the second mounting component 61 is rotatably connected to the armrest 4. The limiting plate 62 is fixedly sleeved onto the outer wall of the second mounting component 61. The edge of the limiting plate 62 has at least one arc-shaped sliding rail 621. One end of the sliding rod 63 is fixedly installed on the side of the armrest 4 near the limiting plate 62, and the other end of the end of the sliding rod 63 extends into the sliding rail 621 and can slide along the sliding rail 621.

In this embodiment, the armrest 4 is rotatably connected to the end of the second mounting component 61 via a bolt, allowing the armrest 4 to rotate vertically around the bolt. The limiting plate 62 has disk-shaped structure, with an arc-shaped sliding rail 621 along its edge. The sliding rail 621 has a first groove 6211 and a second groove 6212 at its two ends. The first groove 6211 corresponds to the folded state of the armrest, the second groove 6212 corresponds to the unfolded state of the armrest. The folded end of the sliding rail 621 is located above the unfolded end. Additionally, the sliding rail 621 limits the rotational angle of the armrest 4.

Due to the arrangement of the rotation mechanism 6, the armrest 4 can be rotated downward as needed, allowing the armrest 4 and the backrest 2 staggered. When the armrest 4 rotated downward, the armrest 4 is positioned at both lateral sides of the bearing plate 3. During movement, the armrest 4 provides protection to the user, preventing sideways tilting. When not in use, the armrest 4 can be rotated upward via the rotation mechanism 6, aligning parallel with the backrest 2 and the sleeve rod 15, thus saving space. Optionally, the surface of the armrest 4 can be equipped with a soft cover 41 to enhance user comfort.

Specifically, in the folded state, the sliding rod 63 is located in the first groove 6211. When in use, the armrest 4 is rotated downward around the bolt connection point, allowing the sliding rod 63 to move from the first groove 6211 toward the second groove 6212. When the sliding rod 63 reaches the second groove 6212, the armrest 4 is fully unfolded, and the second groove 6212 limits the sliding rod 63, preventing further movement and keeping the armrest 4 in the unfolded state. Conversely, to fold the armrest 4, it is rotated in the opposite direction, allowing the sliding rod 63 to return to the first groove 6211. At this point, the first groove 6211 similarly limits the sliding rod 63, preventing further movement and keeping the armrest 4 in the folded state.

In one embodiment, the rotation mechanism 6 is covered with a protective shell 64. The protective shell 64 prevents hands of the user from being pinched during the rotation of the armrest 4, enhancing safety.

In an embodiment, the side wall of the second mounting component 61 is equipped with hooks 611.

In this embodiment, the second mounting components 61 on both sides of the backrest 2 are equipped with hooks 611, which are used for connecting safety belts, further improving safety.

Described above are merely preferred embodiments of this application, and are not intended to limit this application. It should be understood that various variations, modifications and replacements made by those skilled in the art without departing from the spirit of the present disclosure shall fall within the scope of the disclosure defined by the appended claims.

## Claims

1. An electric lift device, comprising:
a frame assembly (1);
a backrest (2);
a bearing plate (3);
at least two armrests (4); and
a driving mechanism (5);
**characterized in that** the frame assembly (1) comprises a first wheel frame (11), a second wheel frame (12), a first connection plate (13), at least two vertical rods (14), a sleeve rod (15) and a second connection plate (16); the first wheel frame (11) and the second wheel frame (12) both have a Z-shaped structure; the first wheel frame (11) is connected to the second wheel frame (12) through the first connection plate (13); the at least two vertical rods (14) are provided spaced apart on the first connection plate (13), and are parallel to each other; a first end of each of the at least two vertical rods (14) is connected to the first connection plate (13), and a second end of each of the at least two vertical rods (14) is movably sleeved with the sleeve rod (15); and an upper end of the sleeve rod (15) is fixedly connected to the second connection plate (16);
the backrest (2) is fixedly connected to an outer side of the sleeve rod (15);
the bearing plate (3) is connected to the sleeve rod (15);
the at least two armrests (4) are respectively provided at two sides of the backrest (2); and
the driving mechanism (5) is provided on a surface of the first connection plate (13), and is configured to drive the sleeve rod (15) to move up and down.

2. The electric lift device of claim 1, **characterized in that** a plane in which the at least two vertical rods (14) are located is configured as a reference plane; the bearing plate (3) is provided at a first side of the reference plane; a first end of the first wheel frame (11) and a first end of the second wheel frame (12) are each provided at the first side of the reference plane; a second end of the first wheel frame (11) and a second end of the second wheel frame (12) are each provided at a second side of the reference plane; and a distance between the first end of the first wheel frame (11) and the first end of the second wheel frame (12) is greater than a distance between the second end of the first wheel frame (11) and the second end of the second wheel frame (12).

3. The electric lift device of claim 2, **characterized in that** each of the first wheel frame (11) and the second wheel frame (12) comprises a first section (121), a second section (122) and a third section (123) connected in sequence from the first side of the reference plane to the second side of the reference plane; the second section (122) is configured to extend toward outside of the electric lift device; an included angle formed by the third section (123) and the second section (122) is larger than or equal to 90° and smaller than 180°; and an included angle formed by the first section (121) and the second section (122) is larger than the included angle formed by the third section (123) and the second section (122), and smaller than 180°.

4. The electric lift device of claim 1, **characterized in that** a bottom of the bearing plate (3) is provided with at least one connection rod (31); a bottom of the backrest (2) is provided with a first mounting component (32); and the first mounting component (32) is detachably connected to the at least one connection rod (31).

5. The electric lift device of claim 4, **characterized in that** a side wall of each of the at least one connection rod (31) is provided with a first through-hole (333); a side wall of the first mounting component (32) is provided with a second through-hole (334); an end of each of the at least one connection rod (31) is inserted into the first mounting component (32); and each of the at least one connection rod (31) is secured to the first mounting component (32) via a pin (33) passing through the first through-hole (333) and the second through-hole (334).

6. The electric lift device of claim 5, **characterized in that** an end of the pin (33) is provided with a flexible strip (331); a first end of the flexible strip (331) is fixedly connected to the pin (33); and a second end of the flexible strip (331) is provided with a loop (332).

7. The electric lift device of claim 1, **characterized in that** the driving mechanism (5) comprises an electric telescopic rod (51), a motor (52) and a power supply (53); the motor (52) is provided on the surface of the first connection plate (13); a first end of the electric telescopic rod (51) is drivably connected to the motor (52); a second end of the electric telescopic rod (51) is hinged to the second connection plate (16); and the power supply (53) is provided on a side wall of the electric telescopic rod (51).

8. The electric lift device of claim 7, **characterized in that** an end of each of the at least two armrests (4) is provided with a controller (42); and the controller (42) is electrically connected to the motor (52), and provided with a control stick (43).

9. The electric lift device of claim 4, **characterized in that** an end of each of the at least two armrests (4) is connected to the backrest (2) through a rotation mechanism (6); the rotation mechanism (6) comprises a second mounting component (61), a limiting plate (62) and a sliding rod (63); a first end of the second mounting component (61) is fixedly connected to the first mounting component (32), and a second end of the second mounting component (61) is rotatably connected to each of the at least two armrests (4); the limiting plate (62) is fixedly sleeved on an outer wall of the second mounting component (61); an edge of the limiting plate (62) is provided with at least one sliding rail (621); the at least one sliding rail (621) has a curved structure; and a first end of the sliding rod (63) is fixedly provided on a side of each of the at least two armrests (4) near the limiting plate (62), and a second end of the sliding rod (63) is configured to extend into and slide along one of the at least one sliding rail (621).

10. The electric lift device of claim 9, **characterized in that** a hook (611) is mounted on the outer wall of the second mounting component (61).

11. The electric lift device of claim 2, further comprising:
a first universal wheel (7); and
a second universal wheel (9);
wherein the first end of the first wheel frame (11) and the first end of the second wheel frame (12) are each provided with the first universal wheel (7); and the second end of the first wheel frame (11) and the second end of the second wheel frame (12) are each provided with the second universal wheel (9) through a third mounting component (8).

12. The electric lift device of claim 11, **characterized in that** a size of the first universal wheel (7) is smaller than or equal to a size of the second universal wheel (9).

13. The electric lift device of claim 11, **characterized in that** the second universal wheel (9) is provided with a locking component (91).

14. The electric lift device of claim 1, **characterized in that** each of the at least two vertical rods (14) is inclined at a preset angle toward a side away from the bearing plate (3) relative to a vertical plane.

15. The electric lift device of claim 14, **characterized in that** the preset angle is 4°-10°.

## Amended claims

### Amended claims in accordance with Rule 137(2) EPC.

1. An electric lift device, comprising:
a frame assembly (1);
a backrest (2);
a bearing plate (3);
at least two armrests (4); and
a driving mechanism (5);
wherein the frame assembly (1) comprises a first wheel frame (11), a second wheel frame (12), a first connection plate (13), a sleeve rod (15) and a second connection plate (16); and the first wheel frame (11) is connected to the second wheel frame (12) through the first connection plate (13);
the backrest (2) is fixedly connected to an outer side of the sleeve rod (15);
the bearing plate (3) is connected to the sleeve rod (15);
the at least two armrests (4) are respectively provided at two sides of the backrest (2); and
the driving mechanism (5) is provided on a surface of the first connection plate (13), and is configured to drive the sleeve rod (15) to move up and down; and
**characterized in that** the first wheel frame (11) and the second wheel frame (12) both have a Z-shaped structure; the frame assembly (1) further comprises at least two vertical rods (14), and the at least two vertical rods (14) are provided spaced apart on the first connection plate (13), and are parallel to each other; a first end of each of the at least two vertical rods (14) is connected to the first connection plate (13), and a second end of each of the at least two vertical rods (14) is movably sleeved with the sleeve rod (15); and an upper end of the sleeve rod (15) is fixedly connected to the second connection plate (16).

2. The electric lift device of claim 1, **characterized in that** a plane in which the at least two vertical rods (14) are located is configured as a reference plane; the bearing plate (3) is provided at a first side of the reference plane; a first end of the first wheel frame (11) and a first end of the second wheel frame (12) are each provided at the first side of the reference plane; a second end of the first wheel frame (11) and a second end of the second wheel frame (12) are each provided at a second side of the reference plane; and a distance between the first end of the first wheel frame (11) and the first end of the second wheel frame (12) is greater than a distance between the second end of the first wheel frame (11) and the second end of the second wheel frame (12).

3. The electric lift device of claim 2, **characterized in that** each of the first wheel frame (11) and the second wheel frame (12) comprises a first section (121), a second section (122) and a third section (123) connected in sequence from the first side of the reference plane to the second side of the reference plane; the second section (122) is configured to extend toward outside of the electric lift device; an included angle formed by the third section (123) and the second section (122) is larger than or equal to 90° and smaller than 180°; and an included angle formed by the first section (121) and the second section (122) is larger than the included angle formed by the third section (123) and the second section (122), and smaller than 180°.

4. The electric lift device of claim 1, **characterized in that** a bottom of the bearing plate (3) is provided with at least one connection rod (31); a bottom of the backrest (2) is provided with a first mounting component (32); and the first mounting component (32) is detachably connected to the at least one connection rod (31).

5. The electric lift device of claim 4, **characterized in that** a side wall of each of the at least one connection rod (31) is provided with a first through-hole (333); a side wall of the first mounting component (32) is provided with a second through-hole (334); an end of each of the at least one connection rod (31) is inserted into the first mounting component (32); and each of the at least one connection rod (31) is secured to the first mounting component (32) via a pin (33) passing through the first through-hole (333) and the second through-hole (334).

6. The electric lift device of claim 5, **characterized in that** an end of the pin (33) is provided with a flexible strip (331); a first end of the flexible strip (331) is fixedly connected to the pin (33); and a second end of the flexible strip (331) is provided with a loop (332).

7. The electric lift device of claim 1, **characterized in that** the driving mechanism (5) comprises an electric telescopic rod (51), a motor (52) and a power supply (53); the motor (52) is provided on the surface of the first connection plate (13); a first end of the electric telescopic rod (51) is drivably connected to the motor (52); a second end of the electric telescopic rod (51) is hinged to the second connection plate (16); and the power supply (53) is provided on a side wall of the electric telescopic rod (51).

8. The electric lift device of claim 7, **characterized in that** an end of each of the at least two armrests (4) is provided with a controller (42); and the controller (42) is electrically connected to the motor (52), and provided with a control stick (43).

9. The electric lift device of claim 4, **characterized in that** an end of each of the at least two armrests (4) is connected to the backrest (2) through a rotation mechanism (6); the rotation mechanism (6) comprises a second mounting component (61), a limiting plate (62) and a sliding rod (63); a first end of the second mounting component (61) is fixedly connected to the first mounting component (32), and a second end of the second mounting component (61) is rotatably connected to each of the at least two armrests (4); the limiting plate (62) is fixedly sleeved on an outer wall of the second mounting component (61); an edge of the limiting plate (62) is provided with at least one sliding rail (621); the at least one sliding rail (621) has a curved structure; and a first end of the sliding rod (63) is fixedly provided on a side of each of the at least two armrests (4) near the limiting plate (62), and a second end of the sliding rod (63) is configured to extend into and slide along one of the at least one sliding rail (621).

10. The electric lift device of claim 9, **characterized in that** a hook (611) is mounted on the outer wall of the second mounting component (61).

11. The electric lift device of claim 2, further comprising:
a first universal wheel (7); and
a second universal wheel (9);
wherein the first end of the first wheel frame (11) and the first end of the second wheel frame (12) are each provided with the first universal wheel (7); and the second end of the first wheel frame (11) and the second end of the second wheel frame (12) are each provided with the second universal wheel (9) through a third mounting component (8).

12. The electric lift device of claim 11, **characterized in that** a size of the first universal wheel (7) is smaller than or equal to a size of the second universal wheel (9).

13. The electric lift device of claim 11, **characterized in that** the second universal wheel (9) is provided with a locking component (91).

14. The electric lift device of claim 1, **characterized in that** each of the at least two vertical rods (14) is inclined at a preset angle toward a side away from the bearing plate (3) relative to a vertical plane.

15. The electric lift device of claim 14, **characterized in that** the preset angle is 4°-10°.
